# EUROPÄISCHE PATENTANMELDUNG

(11) **EP 1 096 244 A2**
(43) Veröffentlichungstag der Anmeldung: **02.05.2001**
(21) Anmeldenummer: 00121542.5
(22) Anmeldetag: 30.09.2000
(51) Int. Cl.: G01N 1/20, G01N 22/04

(54) **Verfahren zum Messen von Feuchtigkeit in Schüttgut**

(30) Priorität: 05.10.1999 DE 19947969
(71) Anmelder: Arnold, Gerd H., 79793 Wutöschingen / Schwerzen (DE)
(72) Erfinder: Arnold, Gerd H., 79793 Wutöschingen / Schwerzen (DE)
(74) Vertreter: Weiss, Peter, Dr.

(57) **Zusammenfassung**

Bei einem Verfahren zum Messen von Feuchtigkeit, insbesondere absoluter Feuchtigkeit in beliebigem Schüttgut, soll an jedem beliebigen Ort das zu messende Schüttgut in eine transportable Einrichtung (R) eingegeben und anschliessend mittels zumindest eines Messsondenelementes (9) die Feuchtigkeit und/oder eine Abweichung zu wenigstens einem vorgegebenen Wert ermittelt werden.

## Beschreibung

Die Erfindung betrifft ein Verfahren zum Messen von Feuchtigkeit, insbesondere absoluter Feuchtigkeit in beliebigem Schüttgut sowie eine Einrichtung zum Durchführen des Verfahrens.

Derartige Verfahren sind in vielfältiger Form und Ausführung auf dem Markt bekannt und gebräuchlich. Im wesentlichen wird zur Bestimmung der Feuchtigkeit in einem Schüttgut eine zu messende Menge Schüttgut entnommen und in einem Labor dessen Feuchtigkeit bestimmt. Dabei kann beispielsweise durch Austrocknung und Gewichtsvergleich eine exakte Menge an Wasser in einem Schüttgut bestimmt werden.

Nachteilig ist jedoch, dass diese Messmethoden sehr zeit- und kostenintensiv sind. Bisherige Messverfahren in Labors sind zwar sehr genau, dauern jedoch sehr lange, bis der Feuchtigkeitswert vorliegt.

Der vorliegenden Erfindung liegt die Aufgabe zugrunde, ein Verfahren sowie eine Einrichtung zum Durchführen des Verfahrens zu schaffen, bei welchen sehr kostengünstig und schnell die Feuchtigkeit jedes beliebigen Schüttgutes sehr exakt bestimmt werden kann.

Zur Lösung dieser Aufgabe führt, dass an jedem beliebigen Ort das zu messende Schüttgut in eine transportable Einrichtung eingegeben und anschliessend mittels zumindest eines Messsondenelementes die Freuchtigkeit und/oder eine Abweichung zu wenigstens einem vorgegebenen Wert ermittelt wird.

Bei der vorliegenden Erfindung lässt sich durch eine vorzugsweise transportable Einrichtung, insbesondere einen Behälter ein beliebiges Schüttgut, wie beispielsweise Kaffee, Weizen, Reis etc. oder Beton aufnehmen bzw. in den Behälter eingeben. Im Behälter sitzt zumindest ein Messsondenelement, welches mit einer Messeinrichtung und insbesondere einem Display der Einrichtung verbunden ist. Die Einrichtung wird vorzugsweise akkubetrieben mit Energie versorgt. Dabei können entsprechende Solarflächen den Akku permanent laden oder dieser kann bei Nichtgebrauch der Einrichtung über ein herkömmliches Ladegerät aufgeladen werden.

Wichtig ist jedoch, dass durch einen unabhängigen und transportablen Behälter, insbesondere Einrichtung beispielsweise an der Baustelle jede Fuhre von flüssigem Beton im Betonwagen bzw. Zementmischer auf eine zulässig korrekte Zusammensetzung überprüft werden kann, indem die Feuchtigkeit, insbesondere die absolute Feuchtigkeit des Schüttgutes überprüft wird. Dies muss sehr schnell vorort an der Baustelle geschehen.

Es hat sich besonders günstig erwiesen, einen zulässigen Feuchtigkeitswert eines zulässigen Schüttgutes als Referenz bzw. Vergleichswert in der Einrichtung abzuspeichern. Dieser Referenzwert bzw. Soll-Wert kann durch eine exakte Messung im Labor ermittelt werden. Dann wird das zulässige Schüttgut in den Behälter eingegeben und geeicht bzw. kalibriert.

Dieser Wert kann als einzelner Wert aber auch in Form einer Eich- oder Messwertkurve ggf. auch mit Toleranzfenstern in der Einrichtung für das jeweilige entsprechende Schüttgut abgespeichert werden. Durch die anschliessenden Folgemessungen vorort, die permanent in beliebigen Zeitabständen erfolgen, lässt sich der aktuelle gemessene Wert der Feuchtigkeit eines eingegebenen Schüttgutes mit einem zulässigen Wert des zulässigen Schüttgutes vergleichen. Liegt dieses in der Toleranz, so ist das Schüttgut zulässig. Überschreitet es die Toleranz, so ist es unzulässig oder der Feuchtigkeitsgehalt im Schüttgut ist zu hoch. Somit können beispielsweise die Kosten, insbesondere der Kaufpreis eines Schüttgutes überprüft werden.

Hierdurch lässt sich exakt das spezifische Gewicht des Schüttgutes, wie beispielsweise Kaffee, Weizen, Zucker od. dgl. bei einer bestimmten Feuchtigkeit bestimmen. Weist das Schüttgut eine höhere Feuchtigkeit auf, so kann Rückschluss auf das eigentliche Gewicht genommen werden, wodurch Abzüge des Kaufpreises vorgenommen werden können. Hierdurch können insbesondere beim Material- oder Schüttguteinkauf erhebliche Kosten durch exakte Überprüfung eingespart werden.

Dabei ist von besonderer Bedeutung, dass durch die transportable Einrichtung immer vorort, jede Lieferung von Schüttgut durch separate Messung auf Feuchtigkeit überprüft weden kann. Dies soll ebenfalls im Rahmen der vorliegenden Erfindung liegen.

Es sind unterschiedliche Schüttgüter mit unterschiedlichen Feuchtigkeiten bekannt. Hierfür kann die Einrichtung spezifiziert werden. Beispielsweise kann die Anordnung des Messsondenelementes im Innenraum des Behälters verändert werden, wobei auch entsprechende Schottwände unterschiedliche Neigungen aufweisen können.

Dabei können auch entsprechende Eichcomputer in der Einrichtung eingesetzt sein, um beispielsweise vorgegebene, im Labor bestimmte Eichkurven und Toleranzbereiche für unterschiedliche Schüttgüter beliebigster Art einzuspeichern und mit den einzelnen Messungen zu vergleichen. Dabei können auch die einzelnen Messungen im Eichcomputer bzw. in der Einrichtung abgespeichert und zur späteren Auswertung dort abgelegt sein.

Bevorzugt werden als Messsondenelemente zur absoluten Feuchtigkeitsmessung, d.h. die Bestimmung des Wassers oder des Wasserdampfes pro Volumeneinheit, kapazitive hochfrequente Sensoren bzw. Messsondenelemente verwendet. Auch sind Mikrowellensonden als Messsondenelemente denkbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht auf eine Einrichtung zum Messen von Feuchtigkeit in beliebigem Schüttgut;
Figur 2 eine Draufsicht auf die Einrichtung gemäss Figur 1;
Figur 3 eine weitere Seitenansicht der Einrichtung zum Messen von Flüssigkeit gemäss Figur 1.

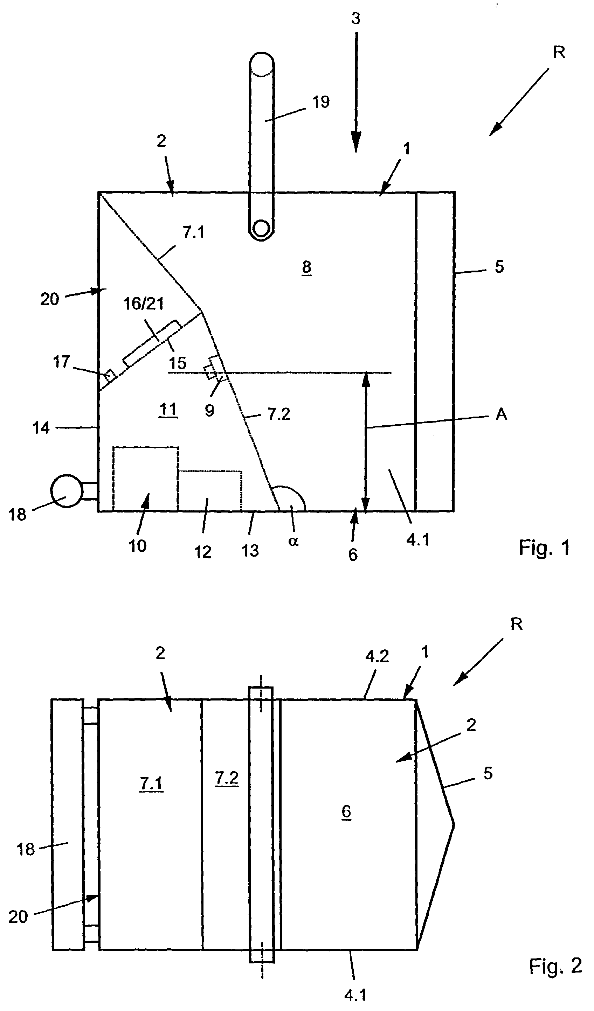

Gemäss Figur 1 weist eine erfindungsgemässe Einrichtung R zum Messen von Feuchtigkeit, insbesonder zum Messen von absoluter Feuchtigkeit einen Behälter 1 auf, welcher oben eine Öffnung 2 zum Einfüllen von beliebigem Schüttgut 3 aufweist. Seitenwände 4.1, 4. 2, siehe auch Figur 2, begrenzen einends den Behälter 1, wobei die beiden Seitenwände 4.1, 4. 2 stirnseitig über ein Ausgiessschnabel 5 miteinander verbunden sind. Ein Behälterboden 6 verschliesst den Behälter 1 nach unten.

Dem Ausgiessschnabel 5 gegenüberliegend schliesst stirnseitig eine erste Schottwand 7.1 an und bildet einen Innenraum 8 des Behälters 1. An die Schottwand 7.1 schliesst eine weitere Schottwand 7.2 an, die an den Behälterboden 6 anschliesst. Dabei ist die Schottwand 7.1 flacher als die Schottwand 7.2 ausgebildet, die im Winkel α zum Behälterboden 6 ausgerichtet ist. Hierdurch wird der Innenraum 8 des Behälters 1 zum Behälterboden 6 verjüngt ausgebildet. Dabei schliesst die Schottwand 7.2 mit dem Behälterboden 6 im Bereich des Innenraumes 8 einen Winkel α ein, welcher vorzugsweise grösser ist als 90°.

Bevorzugt ist der Schottwand 7.2 zumindest ein Messsondenelement 9 zugeordnet, welches zur Bestimmung der Feuchtigkeit des in den Innenraum 8 eingefüllten Schüttgutes 8 dient. Bevorzugt ist das Messsondenelement 9 variabel in einem Abstand A zum Behälterboden 6 in die Schottwand 7.2 einsetzbar.

Im Rahmen der vorliegenden Erfindung soll jedoch auch liegen, eine Mehrzahl von entsprechenden Messsondenelemente 9 in der Schottwand 7.1 und/oder 7.2 einzusetzen.

Ferner soll ebenfalls vom vorliegenden Erfindungsgedanken umfasst sein, zumindest ein Messsondenelement 9 im Bereich des Innenraumes 8, in den Behälterboden 6, in den Aussgiessschnabel 5 oder in die entsprechgenden Seitenwände 4.1, 4.2 einzusetzen. Dies kann in oben beschriebener Weise in einem beliebig wählbaren Abstand A geschehen.

Über hier nicht dargestellte Verbindungsleitungen ist das Messsondenelement 9 mit einer Messeinrichtung 10 verbunden, welche in einen Aufnahmeraum 11 eingesetzt ist. Die Messeinrichtung 10 wird von einer Energiequelle 12, insbesondere einem aufladbaren Akku versorgt. Die Energiequelle 12 sitzt vorzugsweise ebenfalls im Aufnahmeraum 11. Dieser ist zwischen den Seitenwänden 4.1, 4.2, einem Teil 13 des Bodens 6, einer Stirnwand 14 und einer zwischen Stirnwand 14 und den Schottwänden 7.1, 7.2 angeordneten Trennwand 15 gebildet. Nach aussen gerichtet ist der Trennwand 15 ein Display 16 sowie eine Steuerung 17 zugeordnet, welche mit der Messeinrichtung 10 sowie dem Messsondenelement 9 in Verbindung stehen.

Nahe des Teiles 13 des Behälterbodens 6 schliesst an die Stirnwand 14 ein Halteelement 18 an.

Bevorzugt mittig zwischen Stirnwand 14 und Ausgiessschnabel 5 ist nahe der Öffnung 2 ein Griffelement 19 schwenkbar an den Seitenwänden 4.1, 4.2 gelagert. Halteelement 18 und Griffelement 19 dienen zum Entleeren des Behälters 1.

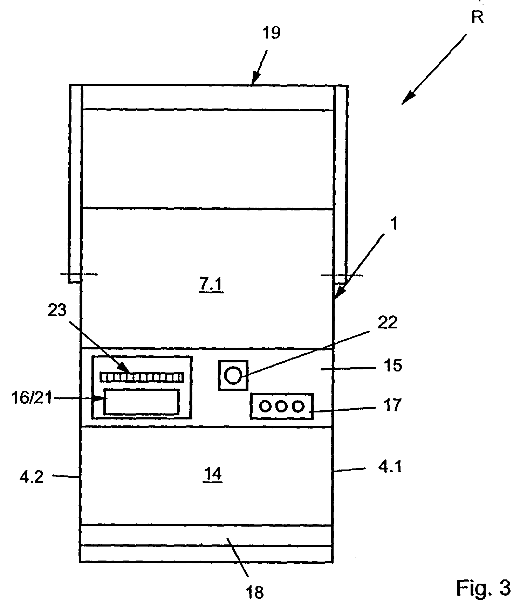

Zwischen den Seitenwänden 4.1, 4.2 ist im Anschluss an die Stirnwand 14 der Behälter 1 mit einer Vertiefung 20 versehen, die aus der Trennwand 15 und der anschliessenden Schottwand 7.1 gebildet ist. In der Trennwand 15 sitzt von aussen sichtbar das Display 16 sowie die Steuerung 17 zur Bedienung der Einrichtung R und/oder eines Eichcomputers 21, wie es insbesondere auch in Figur 3 dargestellt ist.

Ferner ist der Trennwand 15 ein Potentiometer 22 zum Einstellen einer Skalierung 23 im Display 16 zugeordnet.

Die Funktionsweise der vorliegenden Erfindung ist folgende:
Zur Bestimmung, insbersondere zum Messen von Feuchtigkeit, insbesondere absoluten Feuchtigkeit in einem beliebigen Schüttgut 3, wie beispielsweise Lebensmittel, wie Kaffee, Weizen, Mais, Tee od. dgl. aber auch Sand, flüssiger Beton od. dgl. wird zu Testzwecken in eine erfindungsgemässe Einrichtung R, insbesondere in den Behälter 1 eine gewünschte oder beliebig wählbare Menge an Schüttgut 3 eingefüllt. Dabei wird das Schüttgut 3 über die Öffnung 2 in den Innenraum 8 des Behälters 1 eingefüllt, bis dieser zumindest teilweise gefüllt ist.

Anschliessend wird über das Messsondenelement 9 die Feuchtigkeit des Schüttgutes 3 im Behälter 1 gemessen und dessen Wert ggf. über die Messeinrichtung 10 am Display 16 angezeigt.

Damit eine zulässige Feuchtigkeit eines Schüttgutes 3 ermittelbar ist, wird die Feuchtigkeit vor dem Einfüllen von Schüttgut 3 in den Behälter 1 des zu messenden Schüttgut 3 im Labor gemessen. Ist ein bestimmter Soll-Wert erreicht bzw. ermittelt, wird das zulässige Schüttgut in den Behälter 1 eingegeben, um dessen Feuchtigkeit, welche zulässig ist, zu messen. Die entsprechende Messung bzw. der entsprechende gemessene Wert wird in der Messeinrichtung 10 abgespeichert und als Referenzwert am Display 16 angezeigt. Bei erneuter Messung von einem weiteren beliebigen Schüttgut 3 gleicher Art erfolgt eine Messung und ein vergleich zum abgespeicherten zulässigen Wert. Eine tatsächliche Feuchtigkeit lässt sich somit exakt bestimmen.

Dabei kann auch das zulässige Schüttgut 3 in den Behälter 1 eingebracht werden und anschliessend über einen Potentiometer 22 ein Display 16 auf einen bestimmten Wert eingestellt werden oder eine bestimmte Skalierung 23, beispielsweise auf Null eingestellt werden.

Werden anschliessende Messungen von Schüttgut 3 an bliebigen Orten durchgeführt, um deren Feuchtigkeit auf Zulässigkeit zu überprüfen, so wird am Display 16 eine Abweichung oder Änderung der Feuchtigkeit angezeigt, wenn diese vom Soll-Wert oder vom eingestellten bzw. kalibrierten Wert abweicht.

Dabei soll auch im Rahmen der vorliegenden Erfindung liegen, eine Anzahl von unterschiedlichen Eichkurven oder Eichwerten für spezifische und unterschiedliche Schüttgüter 3 in der Messeinrichtung 10 abzulegen und diese ggf. über einen Eichcomputer 21 aufzurufen, um bei permanenten Messungen zum Überprüfen von bleibigen Schüttgütern 3 diese als Referenz heranzuziehen. Auch kann daran gedacht sein, Toleranzkurven oder Toleranzfenster in der Messeinrichtung 10 abzuspeichern, um diese beim permanenten Messen von Schüttgütern 3 und insbesondere zum Überprüfen von Schüttgütern 3 als Vergleichswerte bzw. Referenzkurven heranzuziehen.

Wichtig ist jedoch bei der vorliegenden Erfindung, dass nach einem Einstellen eines zulässigen Wertes für eine zulässige Feuchtigkeit eines ausgewählten Schüttgutes 3, beispielsweise Kaffee mittels der Einrichtung R vorort, beispielsweise bei der Warenannahme oder beim Abfüllen der Ware stichprobenartig mittels der transportablen Einrichtung R das Schüttgut 3 auf gleichbleibende Qualität überprüft werden kann. Weicht der Wert der Feuchtigkeit vom zulässigen Wert ab, so ist dies ein Hinweise auf einen höheren Anteil an Feuchtigkeit, insbesondere Wasser im Schüttgut 3.

Dieser Hinweis lässt auf die Qualität des Schüttgutes 3 schliesen, welches nicht mehr den Anforderungen entspricht oder durch zuviel Feuchtigkeit ein geringeres tatsächliches Gewicht und somit einen geringem Kaufpreis bzw. Wert besitzt.

Unterschiedliche Schüttgüter 3 erfordern eine spezielle Anordnung der Schottwände 7.1, 7.2, sowie Anordnung der Messsondenelemente 9.

Da es insbesondere auf eine homogene Dichte des Schüttgutes 3 im Behälter 1 bei der absoluten Feuchtigkeitsmessung ankommt, hat sich als besonders günstig erwiesen, das Messsondenelement 9 höher als den Behälterboden 6 an einer schräg angeordneten Schottwand 7.2 anzuordnen, wobei dessen Winkel α zum Behälterboden 6 einen grösseren Winkel als 90°, beispielsweise 120° einschliesst.

Für Schüttgüter 3 mit geringerer Feuchtigkeit, kann die Schottwand 7.1, welche das Messsondenelement 9 trägt, auch senkrecht zum Behälterboden 6 angeordnet sein.

Für verhältnismässig trockene Schüttgüter 3 mit einem äusserst geringen Wassergehalt bzw. einer sehr geringen Eigenfeuchte, kann beispielsweise das Messsondenelement 9 im Behälterboden 6 angeordnet sein. Der vorliegenden Erfindung sei hier keine Grenze gesetzt. Auch ist denkbar, den Ausgiessschnabel 5 in analoger Anordnung mit zumindest einem Messsondenelement 9 zu bestücken.

Die jeweiligen Parameter werden für die jeweiligen Schüttgüter 3 bzw. Einrichtungen R eingestellt. Dabei kann auch daran gedacht sein, eine Einrichtung R zu bilden, bei welcher die entsprechenden Parameter, d.h., Abstand A, Winkel α und die Anzahl der Messsondenelemente 9 beliebig einstellbar ist.

Ferner soll im Rahmen der vorliegenden Erfindung liegen, dass dem Behälter 1, insbesondere dessen Bauteile ein Temperatursensor zugeordnet sein kann. Dieser dient zur Beeinflussung des Messergebnisses, insbesondere zur Überprüfung einer bestimmten Messtemperatur.

Mit der vorliegenden Erfindung ist eine Einrichtung geschaffen, mit welcher auf sehr einfache, kostengünstige, effektive und schnelle Weise eine absolute Feuchtigkeit eines beliebigen Schüttgutes 3 vorort in beliebigen Zeitabständen überprüft und bestimmt werden kann.

| **Positionszahlenliste** | | | | | |
|---|---|---|---|---|---|
| 1 | Behälter | 34 | | 67 | |
| 2 | Öffnung | 35 | | 68 | |
| 3 | Schüttgut | 36 | | 69 | |
| 4 | Seitenwand | 37 | | 70 | |
| 5 | Aussgiessschnabel | 38 | | 71 | |
| 6 | Behälterboden | 39 | | 72 | |
| 7 | Schottwand | 40 | | 73 | |
| 8 | Innenraum | 41 | | 74 | |
| 9 | Messsondenelement | 42 | | 75 | |
| 10 | Messeinrichtung | 43 | | 76 | |
| 11 | Aufnahme | 44 | | 77 | |
| 12 | Energiequelle | 45 | | 78 | |
| 13 | Tuch | 46 | | 79 | |
| 14 | Stirnwand | 47 | | | |
| 15 | Trennwand | 48 | | | |
| 16 | Display | 49 | | R | Einrichtung |
| 17 | Steuerung | 50 | | | |
| 18 | Vertiefung | 51 | | α | Winkel |
| 19 | Griffelement | 52 | | | |
| 20 | Eichcomputer | 53 | | A | Abstand |
| 21 | Potentiometer | 54 | | | |
| 22 | Skalierung | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Messen von Feuchtigkeit, insbesondere absoluter Feuchtigkeit in beliebigem Schüttgut,
dadurch gekennzeichnet,
dass an jedem beliebigen Ort das zu messende Schüttgut in eine transportable Einrichtung eingegeben und anschliessend mittels zumindest eines Messsondenelementes die Freuchtigkeit und/oder eine Abweichung zu wenigstens einem vorgegebenen Wert ermittelt wird.

2. Verfahren nach Anspruch 1, dadurch gekennzeichnet, dass nach dem Messen die Freuchtigkeit und/oder die Abweichung an der Einrichtung, insbesondere an einem Display angezeigt wird.

3. Verfahren nach Anspruch 1 oder 2, dadurch gekennzeichnet, dass eine Mehrzahl von Messungen an jedem beliebigen Ort, in beliebig wählbaren Zeitabständen wiederholt wird.

4. Verfahren nach wenigstens einem der Ansprüche 1 bis 3, dadurch gekennzeichnet, dass zur Bestimmung des vorgegebenen Wertes, insbesondere Soll-Wertes die zulässige Feuchtigkeit des Schüttgutes vor Beginn einer Messserie einmalig im Labor ermittelt und anschliessend der zumindest eine vorgegebene Wert auf die Einrichtung übertragen wird.

5. Verfahren nach Anspruch 4, dadurch gekennzeichnet, dass zum Eichen oder Kalibrieren oder Einstellen eines zulässigen Wertes an Feuchtigkeit, das zulässige Schüttgut vor Messbeginn einer Messserie in die Einrichtung eingegeben und ein ermittelter Wert an Feuchtigkeit als Referenzwert eingestellt oder kalibriert wird.

6. Verfahren nach wenigstens einem der Ansprüche 1 bis 5, dadurch gekennzeichnet, dass zum Messen von Feuchtigkeit in Schüttgut eine Mehrzahl von vorgegebenen Werten als Eich- oder Vergleichskurven schüttgutspezifisch in der Einrichtung, insbesondere in einem Eichcomputer abgelegt oder abgespeichert werden.

7. Verfahren nach Anspruch 6, dadurch gekennzeichnet, dass die an der Einrichtung abgelegten oder abgespeicherten Eichkurven oder Vergleichskurven mit den folgenden Messungen von Feuchtigkeit beliebiger Schüttgüter zur Ermittlung eines zulässigen Ist-Zustandes verglichen werden.

8. Verfahren nach wenigstens einem der Ansprüche 4 bis 7, dadurch gekennzeichnet, dass zum Eichen oder Kalibrieren der Einrichtung nach dem Bestimmen einer zulässigen Feuchtigkeit des Schüttgutes im Labor die Messeinrichtung, insbesondere das Display auf einen bestimmbaren Wert eingestellt wird und dann ggf. eine Abweichung beim weiteren Messen von Schüttgut an jedem beliebigen Ort angezeigt und/oder eine Bestimmung einer zulässigen Feuchtigkeit am Display ermöglicht wird.

9. Einrichtung zum Messen von Feuchtigkeit, insbesondere absoluter Feuchtigkeit in beliebigem Schüttgut (3), mit zumindest einem Messsondenelement (9), dadurch gekennzeichnet, dass die Feuchtigkeit des Schüttgutes (3) in einem transportablen Behälter (1) an jedem beliebigen Ort bestimmbar ist.

10. Einrichtung nach Anspruch 9, dadurch gekennzeichnet, dass dem Behälter (1), insbesondere einem Innenraum (8) wenigstens ein Messsondenelement (9) zugeordnet ist.

11. Einrichtung nach Anspruch 9 oder 10, dadurch gekennzeichnet, dass dem Behälter (1) ein Aussengiessschnabel (5) zugeordnet ist.

12. Einrichtung nach wenigstens einem der Ansprüche 9 bis 11, dadurch gekennzeichnet, dass dem Behälter (1) wenigstens eine Schottwand (7.1, 7.2) zugeordnet ist.

13. Einrichtung nach Anspruch 12, dadurch gekennzeichnet, dass die zumindest eine Schottwand (7.1, 7.2) den Behälter (1), insbesondere den Innenraum (8) zu einem Behälterboden (6) verjüngt.

14. Einrichtung nach Anspruch 12 oder 13, dadurch gekennzeichnet, dass eine erste Schottwand (7.1) flacher als eine zweite bis zum Behälterboden (6) ragende Schottwand (7.2) ausgebildet ist.

15. Einrichtung nach Anspruch 13 oder 14, dadurch gekennzeichnet, dass die zweite Schottwand (7.2) zu einem Behälterboden (6) einen Winkel (α) einschliesst, welcher grösser ist als 90° ist und sich etwa im Bereich zwischen 90° und 140° bewegt.

16. Einrichtung nach wenigstens einem der Ansprüche 13 bis 15, dadurch gekennzeichnet, dass zumindest ein Messsondenelement (9) in einem wählbaren Abstand (A) zum Behälerboden (6) beabstandet ist.

17. Einrichtung nach wenigstens einem der Ansprüche 12 bis 16, dadurch gekennzeichnet, dass das zumindest eine Messsondenelement (9) der zumindest einen Schottwand (7.1, 7.2) und/oder dem Behälterboden (6) und/oder dem Ausgiessschnabel (5) zugeordnet ist.

18. Einrichtung nach wenigstens einem der Ansprüche 9 bis 17, dadurch gekennzeichnet, dass an eine Verbindungsstelle zwischen einer ersten und einer zweiten Schottwand (7.1, 7.2) eine Trennwand (15) zur Aufnahme eines Displays (16) vorgesehen ist.

19. Einrichtung nach Anspruch 18, dadurch gekennzeichnet, dass sich an die Trennwand (15) andernends eine Stirnwand (14) anschliesst, welche mit zumindest einem Teil (13) des Behälterbodens (6) und entsprechenden Seitenwänden (4.1, 4.2) einen Aufnahmeraum (11) für eine Messeinrichtung (10), Steuerung und/oder Energiequelle (12), insbesondere aufladbare Energiequelle bildet.

20. Einrichtung nach Anspruch 19, dadurch gekennzeichnet, dass im Bereich der Stirnwand (14) nahe dem Behälterboden (6) ein Halteelement (18) vorgesehen ist.

21. Einrichtung nach Anspruch 19 oder 20, dadurch gekennzeichnet, dass nahe einer Öffnung (2) des Behälters (1), insbesondere des Innenraumes (8) zum Einfüllen von Schüttgut (3) an den Seitenwänden (4.1, 4.2) ein verschwenkbares Griffelement (19) vorgesehen ist.

22. Einrichtung nach wenigstens einem der Ansprüche 19 bis 21, dadurch gekennzeichnet, dass dem Messsondenelement (9) und/oder der Seitenwand (4.1, 4.2) und/oder dem Behälterboden (6) und/oder der Schottwand (7.1, 7.2) zumindest ein Temperatursensor zugeordnet ist.
